# FASCICULE DE BREVET EUROPEEN

(11) **EP 3 640 305 B1**
(45) Date de publication et mention de la délivrance du brevet: **04.12.2024**
(21) Numéro de dépôt: 19204150.7
(22) Date de dépôt: 18.10.2019
(51) Int. Cl.: C09D 7/65, C09D 5/26

(54) **UTILISATION D'UN POLYMERE A UCST DANS UNE COMPOSITION DE REVETEMENT, EN PARTICULIER DE PEINTURE, POUR AMELIORER LE SECHAGE**
VERWENDUNG EINES POLYMERS MIT UCST IN EINER BESCHICHTUNGSZUSAMMENSETZUNG, INSBESONDERE FARBE, FÜR EINE VERBESSERUNG DER TROCKNUNG
USE OF A POLYMER WITH UCST IN A COATING COMPOSITION, IN PARTICULAR FOR PAINT, TO IMPROVE DRYING

(30) Priorité: 19.10.2018 FR 1859669
(43) Date de publication de la demande: 22.04.2020
(73) Titulaire: Cromology, 92110 Clichy (FR)
(72) Inventeur: DESROUSSEAUX, Stéphanie, 38054 GRENOBLE CEDEX 09 (FR); PONCELET, Olivier, 38054 GRENOBLE CEDEX 09 (FR); ANTON, Charlène, 38110 SAINT DIDIER DE LA TOUR (FR)
(74) Mandataire: Cabinet Nony

(56) Documents cités:
- JP-A- 2018 141 067
- US-A- 5 552 231
- US-A1- 2011 160 392
- JAN SEURING ET AL: "First Example of a Universal and Cost-Effective Approach: Polymers with Tunable Upper Critical Solution Temperature in Water and Electrolyte Solution", MACROMOLECULES, vol. 45, no. 9, 8 May 2012 (2012-05-08), WASHINGTON, DC, UNITED STATES, pages 3910 - 3918, XP055594721, ISSN: 0024-9297, DOI: 10.1021/ma300355k

## Description

La présente invention a trait au domaine des formulations fluides aqueuses aptes à former un revêtement en surface d'un support utilisé en bâtiment et dans l'industrie de la construction, en particulier au domaine des formulations de peinture, vernis et laque. Elle vise plus particulièrement à proposer une formulation permettant de moduler les temps de séchage requis pour former le revêtement en fonction des conditions ambiantes de température.

Les « conditions ambiantes de température » s'entendent de la température du milieu ambiant, c'est-à-dire du milieu environnant, à laquelle se déroule l'application de la formulation. Les conditions ambiantes de température correspondent typiquement à une température comprise entre 1 °C et 35 °C, en particulier entre 3 °C et 20 °C.

Dans le cadre de l'application d'une formulation de revêtement, par exemple d'une peinture, l'utilisateur peut se trouver confronter à des conditions ambiantes de température, particulièrement défavorables à la formation du revêtement souhaité.

En particulier, dans des conditions ambiantes froides et humides, le temps de séchage de la peinture pour former le revêtement souhaité peut être excessivement long. Une diminution de température, toute chose égale par ailleurs, ralentit le séchage du film de peinture, tout comme une augmentation du taux d'humidité relative. Ceci impose par exemple au peintre, dans le cas de l'application d'un revêtement multicouches, de longs temps d'attente avant de pouvoir appliquer une deuxième couche de peinture.

Ce problème est particulièrement exacerbé dans le cadre de l'application d'une peinture extérieure, par exemple une peinture façade, l'utilisateur étant dans ce cas particulièrement dépendant des conditions climatiques extérieures.

De plus, dans le cas d'une peinture extérieure présentant un temps de séchage long, la couche de peinture appliquée peut se retrouver exposée, avant son séchage complet, à des conditions ambiantes défavorables, par exemple à la pluie, ce qui peut être préjudiciable à la qualité du revêtement obtenu après séchage.

Dans des conditions ambiantes de température élevée, typiquement pour des températures supérieures à 25 °C, favorables à un séchage rapide de la formulation, il n'est pas souhaitable, en revanche, de raccourcir le temps de séchage. De fait, l'utilisateur doit pouvoir appliquer et étaler correctement la peinture avant son séchage total ou partiel, afin d'éviter la formation de défauts susceptibles d'entraîner des problèmes esthétiques ou de qualité du revêtement formé.

A ce jour, il existe plusieurs techniques proposées dans le domaine des peintures bâtiment en phase aqueuse, pour remédier au problème de séchage en conditions d'application défavorables, par exemple en conditions ambiantes froides et humides, les trois technologies suivantes étant plus particulièrement répandues. La première consiste en l'ajout d'un additif à base de ciment dans la peinture sur le chantier, juste avant son application. Cette technique permet une prise en masse plus rapide et donc un séchage plus rapide du système aqueux. Toutefois, elle présente l'inconvénient d'être un système bi-composant, bien adapté aux revêtements épais de type enduits, et non aux peintures bâtiment en phase aqueuse film mince. La seconde technologie tire profit du phénomène de floculation en surface due à une incompatibilité entre les composants de la peinture de type anionique et un floculant cationique, pour créer un film barrière protecteur en surface (US 2010/010134 ; WO2008/068193). Le pH de la peinture selon cette méthode doit être maîtrisé. Cette technique permet d'accéder à un séchage en surface rapide, mais a pour désavantage de nécessiter l'utilisation d'une base très volatile de type ammoniaque afin de provoquer un changement brusque de pH de la peinture en surface, ce qui pose des problèmes sanitaires pour les personnes exposées (lors de la fabrication en usine ou lors de l'application sur le chantier). La troisième technologie concerne l'élaboration de revêtements, présentant une résistance accrue à l'eau, du fait de la mise en oeuvre d'additif(s) ou de liant(s) permettant de procurer au revêtement un caractère hydrophobe. Toutefois, cette technique ne permet pas d'accélérer le temps de séchage. US 2011/160392 A1 divulgue une composition aqueuse fluide de revêtement comprenant un copolymère à changement de phase de type UCST. Le revêtement est appliqué sur une plaque de culture cellulaire en polystyrène pour prévenir l'adhésion cellulaire.

Ainsi, les méthodes, mises en oeuvre à l'heure actuelle pour pallier le problème de séchage d'une peinture en conditions ambiantes défavorables, impliquent de travailler en bi-composant ou permettent uniquement d'accéder à une protection en surface. Par ailleurs, l'application des formulations proposées peut s'avérer difficile pour des températures ambiantes plus élevées.

Par conséquent, il demeure un besoin de pouvoir moduler efficacement la vitesse de séchage pour former un revêtement, en fonction des conditions ambiantes de température, en particulier selon que la formation du revêtement est réalisée dans des conditions dites « froides », de basses températures, autrement dit à des températures inférieures à 10 °C, ou dans des conditions dites « chaudes », autrement dit à des températures supérieures à 25 °C.

En particulier, il serait souhaitable de pouvoir accélérer la durée de séchage requise pour la formation d'un revêtement, notamment dans des conditions ambiantes de température comprise entre 1 et 35 °C, notamment entre 3 °C et 20 °C, en particulier lors de l'application d'une peinture, dans des conditions ambiantes de basse température.

La présente invention a précisément pour objet de répondre à ce besoin.

Ainsi, selon un premier de ses aspects, la présente invention concerne l'utilisation, dans une composition aqueuse fluide apte à former un revêtement en surface d'un support utilisé en bâtiment et dans l'industrie de la construction, d'au moins un polymère à changement de phase de type UCST, à titre d'additif pour réduire la durée de séchage requise pour former ledit revêtement dans des conditions ambiantes de température inférieure à la valeur de température critique de solubilité, dite UCST, du polymère dans l'eau, en particulier dans des conditions ambiantes de température comprise entre 1°C et 35 °C, notamment entre 3°C et 20°C, en particulier inférieure ou égale à 10°C.

Les polymères à changement de phase de type UCST sont des polymères dits « thermosensibles » ou « thermo-actionnables ». Ces polymères subissent en milieu aqueux une transition réversible. A une température en-dessous de leur valeur de température, dite température critique supérieure de solubilité « UCST » (pour « Upper Critical Solution Température » en terminologie anglo-saxonne), le polymère est hydrophobe et ses chaînes sont repliées, provoquant une séparation de phase. A une température au-dessus de la valeur d'UCST, le polymère est hydrophile, et ses chaînes sont déployées et solubilisées dans le milieu aqueux.

Le ou les polymères à changement de phase de type UCST mis en oeuvre dans une formulation selon l'invention sont désignés plus simplement dans la suite du texte sous l'appellation « polymère(s) à UCST » ou « additif(s) à UCST ».

Des polymères thermosensibles ont déjà été mis en oeuvre pour influer sur la durée de séchage.

En particulier, le document WO 2015/037996 propose un système d'extraction de l'humidité, pour le séchage d'un flux gazeux, en mettant en oeuvre un support fibreux revêtu d'un polymère à LCST, autrement dit un polymère présentant une température critique inférieure de solubilité, dite LCST (« Lower Critical Solution température » en terminologie anglo-saxonne). Ces polymères à LCST ont un comportement inverse de celui des polymères à UCST : à une température au-dessus de la LCST, le polymère dans l'eau est hydrophobe et ses chaînes sont repliées en provoquant une séparation de phase. A une température en-dessous de la température LCST, le polymère dans l'eau est hydrophile, et ses chaînes sont déployées et solubilisées dans le milieu. Dans le système décrit dans ce document, l'humidité de l'air est captée par le polymère lorsque la température est en-dessous de la LCST. Puis, lorsque le polymère est saturé d'eau, la température est élevée au-dessus de la LCST, le polymère devient hydrophobe et l'eau est libérée sous forme liquide et récupérée par un système de drainage. L'accélération du séchage par le système décrit dans ce document nécessite donc un apport de chaleur extérieur pour éliminer l'eau. Le phénomène d'élimination de l'eau nécessite ainsi d'opérer deux étapes : une première étape à basse température pour capter l'humidité de l'air dans le polymère à LCST porté par des fibres et, une deuxième étape à plus haute température, pour régénérer le composant qui capte l'humidité.

La géométrie du système de séchage nécessite la présence, au niveau du support, de cavités pour permettre la circulation de la vapeur d'eau ou de l'eau liquide, ce qui est à l'opposé des spécifications requises pour un revêtement de peinture, continu et homogène. Un tel système de séchage n'est donc nullement adapté au séchage d'une couche d'une formulation aqueuse, par exemple d'une peinture enduite sur un support, pour former un revêtement.

On peut encore citer le document EP 1 338 919, qui propose une méthode pour réduire le temps de séchage d'un revêtement sur un substrat utilisé pour créer des images par impression jet d'encre ou par photographie argentique. Un co-polymère à LCST est utilisé pour former un gel par réticulation avec un liant hydrophile à une température en-dessous de la LCST, et créer une porosité lors du passage au-dessus de la LCST. La présence de cette porosité permet d'accélérer l'élimination de l'eau contenue dans le revêtement lorsque la température est augmentée. Là encore, le séchage se fait avec un apport de chaleur, et non pas à basse température. Par ailleurs, il est nécessaire de créer un gel chimique par réticulation entre les composants de la formulation et le polymère thermosensible pour former une porosité qui favorise l'élimination de l'eau et le séchage du revêtement. La formation d'une porosité, exploitable dans le cadre d'une impression par jet d'encre, est en revanche à prohiber dans le domaine des revêtements de type peinture, laque ou vernis.

Comme illustré dans les exemples qui suivent, les inventeurs ont constaté que l'ajout, dans une formulation aqueuse de revêtement telle qu'une formulation de peinture aqueuse, d'un polymère à UCST permet de réduire significativement la durée de séchage requise pour la formation du revêtement, après application de la formulation, dans des conditions ambiantes de température inférieure à la valeur d'UCST du polymère, sans nécessiter d'apport de chaleur extérieur.

Il est ainsi possible, en supplémentant une formulation conventionnelle de type peinture, avec un polymère à UCST choisi de manière adéquate pour présenter une UCST supérieure aux températures d'application visées, auxquelles il est souhaitable d'accélérer le séchage, de réduire significativement la durée de séchage requise pour former le revêtement.

Ainsi, dans des conditions de température froide, en particulier à des températures inférieures à 10 °C, une formulation de revêtement selon l'invention, supplémentée avec au moins un polymère à UCST dont la valeur d'UCST est supérieure à 10 °C, présente une vitesse de séchage significativement plus élevée, comparativement à celle d'une formulation exempte du polymère à UCST. Dans la pratique, par exemple lors de la formation d'un revêtement de peinture multicouche à des basses températures ambiantes, le séchage accéléré du revêtement permettra au peintre de pouvoir appliquer la deuxième couche de peinture plus rapidement, et ainsi d'obtenir le revêtement souhaité en un temps réduit.

En revanche, de manière avantageuse, l'ajout du polymère UCST à une formulation de revêtement selon l'invention, par exemple à une formulation de peinture, n'impacte pas la durée de séchage, lorsque la formation du revêtement est opérée dans des conditions ambiantes de température supérieure à l'UCST du polymère, et notamment dans des conditions ambiantes chaudes.

Sans vouloir être lié par la théorie, à une température inférieure à l'UCST du polymère, ce dernier présente un caractère hydrophobe et va expulser l'eau de la formulation, favorisant ainsi le séchage du revêtement. *A contrario,* à une température de séchage supérieure à la température UCST du polymère, ce dernier est hydrophile et tend à retenir l'eau.

Ainsi, de manière avantageuse, il est possible, *via* la mise en oeuvre d'un polymère à UCST présentant une valeur d'UCST adéquate, d'obtenir une formulation de revêtement, en particulier une formulation de peinture, vernis ou laque, présentant des propriétés de séchage améliorées, en particulier permettant un séchage accéléré dans des conditions ambiantes de températures froides, sans impacter pour autant la durée de séchage dans le cadre de l'application de cette même formulation à des températures plus élevées.

La présente invention concerne, selon un autre de ses aspects, une composition fluide aqueuse de type peinture, vernis ou laque, destinée à former un revêtement en surface d'un support utilisé en bâtiment et dans l'industrie de la construction, caractérisée en ce qu'elle comprend au moins un polymère à changement de phase de type UCST.

L'invention trouve une application particulièrement intéressante pour la formulation de peintures extérieures, en particulier de peintures façade. L'application d'une formulation de peinture extérieure supplémentée avec un polymère à UCST selon l'invention peut ainsi être effectuée avec des temps de séchage satisfaisants, indépendamment des conditions ambiantes de température extérieure, et en particulier sans que des conditions extérieures froides et humides ne soient préjudiciables à la formation du revêtement.

L'invention concerne encore, selon un autre de ses aspects, un procédé de formation, dans les conditions ambiantes de température, d'un revêtement en surface d'un support, utilisé en bâtiment et dans l'industrie de la construction, à partir d'une composition aqueuse fluide, en particulier une composition de peinture, laque ou vernis, comprenant au moins un polymère à UCST.

Comme détaillé dans la suite du texte, une composition selon l'invention peut être obtenue par simple ajout du ou desdits polymères à UCST dans une formulation aqueuse classiquement utilisée pour former un revêtement à la surface d'un support, telle qu'une formulation aqueuse de peinture, laque ou vernis, sans nécessiter d'opérer d'autres modifications annexes. En particulier, l'ajout des polymères à UCST ne nécessite pas l'ajout d'autres composés annexes, et n'impacte pas sur les autres spécifications auxquelles doit répondre la formulation (par exemple, homogénéité, résistance, couvrance, coloration, brillance du revêtement, etc.).

D'autres caractéristiques, variantes et avantages de la mise en oeuvre d'un polymère à UCST dans une formulation selon l'invention ressortiront mieux à la lecture de la description, des exemples et figures qui vont suivre, donnés à titre illustratif et non limitatif.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comprenant un(e) » doit être comprise comme « comportant au moins un(e) ».

Dans le cadre de la présente invention, on parle de « revêtement » pour désigner le film (ou couche) de formulation « sec », obtenu à l'issue du séchage, autrement dit présentant une teneur massique en eau et/ou solvants aqueux volatils inférieure à 30 %, en particulier inférieure à 15 %. Le terme « couche » sans autre indication est réservé pour désigner le film de formulation appliqué, par exemple enduite sur un support, avant son séchage total.

### COMPOSITION DE REVETEMENT SUPPLEMENTEE AVEC UN POLYMERE A UCST

### Polymère à UCST

Comme mentionné ci-dessus, une composition selon l'invention comprend au moins un polymère thermosensible présentant une température critique supérieure de solubilité dans l'eau, dite UCST.

Par « polymère à UCST », on entend désigner aussi bien des homopolymères formés à partir d'un seul type de monomères que des copolymères formés à partir d'au moins deux monomères distincts.

On entend par « température critique supérieure de solubilité dans l'eau », ou « UCST », la température critique en-dessous de laquelle le polymère perd sa solubilité dans l'eau, et au-dessus de laquelle il devient soluble dans l'eau.

Le polymère mis en oeuvre dans le cadre de l'invention peut présenter une valeur d'UCST dans l'eau, supérieure ou égale à 6 °C, en particulier allant de 6 °C à 60 °C, de préférence allant de 8 °C à 35 °C, notamment de 8 °C à 30 °C et plus particulièrement de 10 °C à 25°C.

Il est entendu que la nature du ou desdits polymères à UCST mis en oeuvre dans une composition selon l'invention est choisie au regard de leur valeur d'UCST, compte-tenu des conditions d'application envisagées pour la composition, en particulier des conditions de température d'utilisation qui seront préconisées pour la composition.

Plus particulièrement, le polymère à UCST est choisi tel qu'il présente une UCST supérieure aux températures d'application visées auxquelles il est souhaitable d'accélérer le séchage, autrement dit de réduire la durée de séchage requise pour former le revêtement.

La mise en oeuvre d'un polymère présentant une telle valeur d'UCST permet avantageusement d'obtenir l'effet recherché en termes de séchage accéléré pour des températures auxquelles se pose habituellement le problème d'un séchage lent, en particulier pour une température ambiante comprise entre 1°C et 35°C ; en particulier entre 3°C et 20°C, et avantageusement pour des basses températures, notamment pour une température ambiante inférieure ou égale à 10 °C, plus particulièrement comprise entre 3 et 10 °C.

La valeur d'UCST dans l'eau pure peut être obtenue par détermination du point de trouble en faisant varier la température d'une dispersion du polymère à UCST dans l'eau. Le point de trouble peut être par exemple déterminé par mesure de la variation de la transmission optique en fonction de la température pour une dispersion à 5 % massique du polymère dans l'eau, comme décrit plus précisément dans les exemples qui suivent.

Les polymères à UCST mis en oeuvre dans une composition selon l'invention peuvent être plus particulièrement choisis parmi les homopolymères ou copolymères dont l'UCST repose sur la formation de liaisons hydrogène intra- ou intermoléculaires.

De tels polymères sont par exemple décrits dans la publication Macromolecular Rapid Communications 33, 1898-1920 (2012).

Ils peuvent être notamment choisis parmi les homopolymères, et copolymères résultant de la polymérisation d'au moins un monomère, d'acide acrylique, méthacrylamide, uracilacrylate, *N*-acryloyl glycinamide, *N*-acryloyl asparagine amide, *N*-acryloyl glutamine amide, *N*-acryloyl glutamine amide ou *N*-méthacryloyl asparagine amide ; les copolymères d'allylamine et d'allylurée, les copolymères de L-citrulline et de L-ornithine ; les copolymères d'acrylamide et d'un co-monomère hydrophobe, en particulier les copolymères d'acrylamide et d'acrylonitrile et les copolymères de (méth)acrylamide et de N-acétylacrylamide.

Les polymères à UCST mis en oeuvre selon l'invention peuvent être obtenus par des méthodes de synthèse connues de l'homme du métier.

Conviennent tout particulièrement à l'invention les copolymères résultant de la copolymérisation de l'acrylamide et d'un co-monomère hydrophobe, en particulier les copolymères d'acrylamide et d'acrylonitrile. De tels copolymères peuvent avantageusement présenter des valeurs d'UCST variant entre 6 et 60 °C, de préférence de 8 à 35 °C.

La proportion entre les deux co-monomères et les conditions de polymérisation (température, concentration, taux d'ajout) déterminent la valeur de l'UCST. Plus précisément, plus la proportion en acrylonitrile est grande, plus la valeur de l'UCST du copolymère formé est haute.

La synthèse de ces copolymères, et leurs propriétés thermo-actionnables, sont décrites dans la publication Macromolecules 45, 3910-3918 (2012).

Selon un mode de réalisation particulier, le polymère à UCST mis en oeuvre dans une composition selon l'invention peut être un copolymère d'acrylamide et d'acrylonitrile obtenu à partir d'un mélange de monomères comprenant au moins 10 % molaire d'acrylonitrile, en particulier comprenant de 11 à 30 % molaire d'acrylonitrile.

### Composition de revêtement

Les polymères à UCST peuvent être utilisés selon l'invention dans tout type de formulation aqueuse apte à former un revêtement en surface d'un support.

Une composition selon l'invention est plus particulièrement destinée à former un revêtement à la surface d'un support matériel, utilisé en bâtiment et dans l'industrie de la construction. Ainsi, une composition selon l'invention se distingue notamment des formulations cosmétiques ou dermatologiques. En particulier, elle est inadaptée à une application sur les matières kératiniques, par exemple sur les ongles.

Le support d'application peut être en bois, en métal, en verre, en béton, en ciment, en plâtre, en briques, etc., avec ou sans traitement préalable, par exemple avec ou sans enduction préalable par un primaire d'adhérence.

Il peut s'agir par exemple de la façade d'un bâtiment, notamment dans le cas d'une peinture extérieure.

Il est entendu que la surface du support sur laquelle la composition selon l'invention est destinée à former un revêtement, peut être préalablement soumise à un ou plusieurs pré-traitements, en particulier être revêtue d'une ou plusieurs couches intermédiaires.

Selon un mode de réalisation particulièrement préféré, une composition selon l'invention est une composition de peinture aqueuse, de laque aqueuse ou de vernis aqueux.

Une composition selon l'invention peut être ainsi formée d'une formulation aqueuse classique de peinture, vernis ou laque, supplémentée avec au moins un polymère à UCST.

Selon une variante de réalisation particulièrement préférée, une composition de revêtement selon l'invention est une peinture aqueuse. Il peut s'agir notamment d'une peinture extérieure (autrement dit, une peinture utilisable en extérieur) et plus particulièrement d'une peinture façade, dont l'utilisation est particulièrement soumise aux variations de conditions climatiques ambiantes, en particulier à des conditions ambiantes froides et humides.

Les termes « peinture », « laque » et « vernis » ont la signification usuelle dans le domaine technique visé. Ces formulations visent à former un revêtement de polymère déposé sur un substrat et protégeant le substrat.

Une « peinture » désigne une formulation opaque qui permet d'apporter une protection et un aspect esthétique au support revêtu. Selon la nature des composants qui la constituent, elle apporte des propriétés spécifiques au support. Par exemple, une peinture « façade » montre des performances de résistance aux contraintes extérieures comme l'exposition aux UVs ou encore aux intempéries.

Une « laque » désigne une formulation opaque ou semi-opaque, d'aspect tendu, destinée à des supports tels que le bois, le carrelage, le stratifié, etc. Elle présente des performances techniques adaptées à des contraintes mécaniques élevées, tels que le frottement, l'adhérence sur support difficile, etc. Elle peut également être soumise aux UVs.

Un « vernis » est une formulation transparente ou semi-transparente qui permet d'apporter des propriétés spécifiques au support ou au film qu'il recouvre (propriétés mécaniques, physico-chimiques, thermiques, esthétiques, etc.).

Par « aqueuse », on entend signifier que la formulation selon l'invention comprend au moins de l'eau et/ou un ou plusieurs solvants organiques miscibles dans l'eau, comme par exemple les glycols, les esters d'alcool, etc.

Il est entendu que le ou les polymères à UCST sont mis en oeuvre dans la formulation selon l'invention en une quantité efficace, autrement dit une quantité suffisante pour obtenir l'effet recherché, plus précisément, pour réduire le temps de séchage de la couche de formulation après son application pour former un revêtement en surface d'un support, dans des conditions ambiantes de températures inférieures à l'UCST du polymère.

En particulier, le ou lesdits polymère(s) à UCST peuvent être présents dans une composition aqueuse selon l'invention en une teneur d'au moins 0,1 % en poids, en particulier allant de 0,1 à 10 % en poids, notamment allant de 2 à 7 % en poids et plus particulièrement à environ 5 % en poids.

Bien entendu, l'(les) additif(s) à UCST est (sont) introduit(s) en une quantité telle qu'ils n'affectent pas les autres spécifications (par exemple, homogénéité, couvrance, coloration, brillance, etc. du revêtement) auxquelles doit répondre la formulation de revêtement, par exemple la peinture.

Avantageusement, le ou les polymères à UCST peuvent être ajoutés directement à une formulation aqueuse classiquement utilisée pour former un revêtement, telle qu'une formulation de peinture, laque ou vernis, sans nécessiter d'autre modification, en particulier sans requérir l'ajout d'additif pour créer un lien chimique avec un ou plusieurs constituants, par exemple avec les liants, de la composition.

Le ou les polymères à UCST peuvent avantageusement être ajoutés à n'importe quel stade de la préparation de la formulation aqueuse.

De plus, de manière avantageuse, le ou les polymères à UCST peuvent être présents dans la formulation de revêtement pour une durée longue sans déstabiliser la formulation. Ainsi, il n'est pas nécessaire selon l'invention que le ou les polymères à UCST soient ajoutés au sein de la formulation juste avant l'application.

Enfin, de manière avantageuse, l'ajout du ou des polymères à UCST à une formulation classique de peinture, laque ou vernis n'affecte pas les propriétés du revêtement formé à l'issue du séchage, en particulier en termes de résistance et d'homogénéité.

Une composition selon l'invention peut comprendre, outre ledit ou lesdits additif(s) à UCST, divers adjuvants classiquement considérés dans les formulations aqueuses de revêtement de type de peinture, vernis ou laque.

Les formulations de peinture, vernis ou laque comprennent typiquement, outre un ou plusieurs solvant(s), un ou plusieurs composés choisis parmi les liants, les charges, les pigments et des additifs.

Les liants ont généralement pour fonction de contribuer à la dispersion des particules telles que les pigments si présents au sein de la composition, et d'assurer les performances mécaniques, après séchage de la composition appliquée en surface d'un support, du film sec.

Le ou les liants peuvent être de diverses natures chimiques, principalement des résines, des dispersions ou des émulsions de type époxy cycloaliphatiques, acryliques, styrénique, vinyliques, cétoniques, polyesters et aldéhydes. Des liants de type cire et gomme peuvent également être présents.

De préférence, une composition selon l'invention comprend ainsi au moins un liant, en particulier une émulsion de type acrylique, vinylique ou encore styrène acrylique.

La teneur en liant(s) dans une composition de l'invention peut être comprise entre 5 % et 50 % en poids, en particulier entre 6 % et 20 % en poids.

Comme indiqué précédemment, une composition selon l'invention comprend un ou plusieurs solvants choisis parmi l'eau et les solvants organiques miscibles dans l'eau, par exemple des glycols, des esters d'alcool.

Le ou les solvants peuvent être présents à raison de 5 % à 60 % en poids, en particulier de 10 % à 45 % en poids, par rapport au poids total de la composition selon l'invention.

Une composition selon l'invention peut également contenir, en outre, des charges.

Les charges sont des particules minérales, plus ou moins blanches, plus ou moins colorées selon la nature de celles-ci, insolubles dans une solution aqueuse, destinées à apporter de la texture au produit liquide, et à contribuer à la blancheur et à l'opacité du film résultant.

Les charges peuvent être présentes à raison de 0 à 50 % en poids, notamment de 5 % à 45 % en poids, et en particulier de 10 % à 40 % en poids, par rapport au poids total de la composition selon l'invention.

Une composition selon l'invention peut également contenir, en outre, un ou plusieurs pigment(s).

Par pigments, il faut comprendre des particules blanches ou colorées, minérales ou organiques, insolubles dans une solution aqueuse, destinées à colorer et/ou opacifier le film résultant.

Comme pigments minéraux utilisables dans l'invention, on peut citer les oxydes de titane, de zirconium ou de cérium ainsi que les oxydes de zinc, de fer ou de chrome, le bleu ferrique, le violet de manganèse, le bleu outremer et l'hydrate de chrome.

Selon une variante de réalisation, ces pigments peuvent être également des pigments perlescents ou dits encore nacrés, et/ou des pigments luminescents et en particulier fluorescents ou phosphorescents.

De préférence, une composition selon l'invention, en particulier de type peinture, laque ou vernis, comprend au moins un pigment, en particulier du dioxyde de titane.

Les pigments peuvent être présents à raison de 0,5 % à 40 % en poids, notamment de 2 % à 35 % en poids, et en particulier de 3 % à 30 % en poids, par rapport au poids total de la composition selon l'invention.

Selon un mode de réalisation particulier, une composition selon l'invention, en particulier de type peinture, laque ou vernis, peut comprendre ;
- de 0,1 à 10 % en masse de polymère(s) à UCST, en particulier tels que définis précédemment ;
- de 5 à 50 % en masse d'un ou plusieurs agents liants, de préférence une résine ;
- de 5 à 60 % en masse de solvant(s) choisi(s) parmi l'eau et/ou des solvants organiques miscibles dans l'eau ;
- de 0 à 50 % en masse d'une ou plusieurs charges ; et
- de 0,5 à 40 % en masse d'un ou plusieurs pigments, en particulier du dioxyde de titane.

Les compositions selon l'invention peuvent également comprendre un ou plusieurs additifs, classiquement mis en oeuvre dans les formulations de peinture, laque ou vernis, en particulier choisis parmi des agents dispersants, des agents mouillants, des agents de neutralisation, des agents épaississants, des agents anti-mousses, des agents biocides, des agents de coalescence, des agents « anti-flash rusting », des agents anti-calcaire, des agents d'étalement, des agents matants, des agents de glisse ou encore des siccatifs.

Une composition selon l'invention, en particulier de type peinture, laque ou vernis, présente généralement une viscosité, mesurée à 25°C et pression atmosphérique, comprise entre 500 mPa.s et 50000 mPa.s.

La viscosité est mesurée à l'aide d'un viscosimètre Brookfield.

Cette viscosité peut être ajustée au regard de la destination de la composition, selon par exemple qu'il s'agisse d'un vernis, d'une laque ou d'une peinture, du support d'application, mais également au regard du mode d'application considéré pour appliquer la composition en surface du support.

La viscosité de la composition fluide selon l'invention peut être ajustée *via* la nature et/ou la quantité du milieu solvant ou encore *via* la quantité de liant(s) si présent(s) dans la composition selon l'invention.

Une composition selon l'invention peut être préparée par simple mélange du ou des polymères à UCST avec les autres composants de la composition.

Le ou les polymères à UCST sont de préférence formulés sous une forme solubilisée dans un solvant aqueux, en particulier dans l'eau.

De manière avantageuse, une composition selon l'invention peut être obtenue par simple ajout à une formulation aqueuse conventionnelle de peinture, vernis ou laque, préalablement préparée, par exemple à une formulation déjà existante, d'un ou plusieurs polymères à UCST, en particulier mis en oeuvre sous forme solubilisée dans l'eau.

Ainsi, l'invention concerne encore, selon un autre de ses aspects, un procédé de préparation d'une composition aqueuse fluide telle que définie précédemment, par ajout à une formulation de peinture, de vernis ou de laque destinée à être utilisée en bâtiment et dans l'industrie de la construction, d'au moins un polymère à changement de phase de type UCST, en particulier tel que défini ci-dessus.

La présente invention concerne encore, selon un autre de ses aspects, un réceptacle, en particulier un pot, contenant une composition de peinture, de vernis ou de laque selon l'invention.

### FORMATION DU REVETEMENT A LA SURFACE D'UN SUPPORT

Comme évoqué ci-dessus, une formulation selon l'invention est particulièrement adaptée à une utilisation à des fins de former un revêtement dans des conditions ambiantes de température, typiquement pour des températures comprises entre 1°C et 35 °C, notamment entre 3°C et 35°C.

Selon une variante de réalisation, une formulation selon l'invention peut encore être utilisée dans des conditions de température en-dessous des conditions ambiantes (en-dessous de 3 °C, notamment en-dessous de 1°C).

La formation du revêtement en surface d'un support à partir d'une composition selon l'invention comprend typiquement (i) l'application d'une couche de la composition en surface du support, suivie (ii) du séchage de ladite couche.

L'application de la composition fluide est typiquement effectuée par enduction. Elle peut encore être effectuée par pulvérisation de la composition en surface dudit support.

L'application peut être opérée par tout moyen conventionnel utilisé en bâtiment, tel que par pinceau, brosse, rouleau, pistolet airless, taloche, etc.

De manière avantageuse, les étapes d'application et de séchage pour conduire à un revêtement selon l'invention sont opérées dans les conditions ambiantes. En particulier, le procédé de l'invention ne comprend aucune action visant à réduire ou à augmenter la température de la formulation et/ou du milieu environnant, lors de son application et de son séchage.

Autrement dit, la formulation du revêtement selon l'invention, en particulier le séchage de la couche de formulation en surface du support, ne fait intervenir aucun traitement thermique, c'est-à-dire aucun apport de chaleur extérieur.

Le procédé selon l'invention, en particulier les étapes (i) et (ii), s'effectue ainsi dans les conditions ambiantes de température, en particulier à une température comprise entre 1°C et 35°C, en particulier entre 3°C et 35°C, et plus particulièrement entre 3 et 20 °C et plus particulièrement inférieure ou égale à 10 °C.

Selon une variante de réalisation particulièrement avantageuse, le revêtement est formé dans des conditions ambiantes de température inférieure à la valeur de température critique supérieure de solubilité, UCST, du polymère dans l'eau, en particulier à une température strictement inférieure à l'UCST du polymère. En particulier, le revêtement est formé dans des conditions ambiantes de température comprise entre 1°C et 35 °C, en particulier entre 3 °C et 20 °C, notamment inférieure ou égale à 10 °C.

En particulier, il peut être formé à une température au moins 5°C en dessous de l'UCST du polymère (soit inférieure ou égale à une température T=UCST-5°C) et plus particulièrement au moins 10°C en dessous de l'UCST du polymère (soit inférieure ou égale à une température T=UCST-10°C).

Comme illustré dans les exemples qui suivent, une composition selon l'invention permet avantageusement de former, dans de telles conditions ambiantes de température, en particulier dans des conditions de basses températures, un revêtement avec une durée de séchage significativement réduite comparativement à la durée de séchage requise pour une même formulation non supplémentée avec le polymère à UCST.

L'utilisateur peut répéter les étapes d'application et de séchage pour accéder à l'épaisseur du revêtement souhaitée.

Un revêtement formé, selon l'invention, par exemple de type peinture, laque ou vernis, peut typiquement présenter une épaisseur allant de 50 µm à 10 mm, en particulier de 100 µm à 500 µm.

L'invention concerne encore, selon un autre de ses aspects, un support, utilisé en bâtiment et dans l'industrie de la construction, caractérisé en qu'il présente un revêtement de surface, en particulier de type peinture, laque ou vernis, obtenu comme décrit précédemment.

Le ou lesdits polymères à UCST peuvent représenter de 0,1 à 10 % massique de la masse totale du revêtement formé, à l'issue du séchage dans les conditions ambiantes de température, en particulier de 2 à 5 % massique.

L'invention va maintenant être décrite au moyen des exemples et figures suivants, illustrant la mise en oeuvre d'un polymère à UCST dans une formulation de type peinture.

Ces exemples et figures sont bien entendu donnés à titre illustratif et non limitatif de l'invention.

### FIGURES

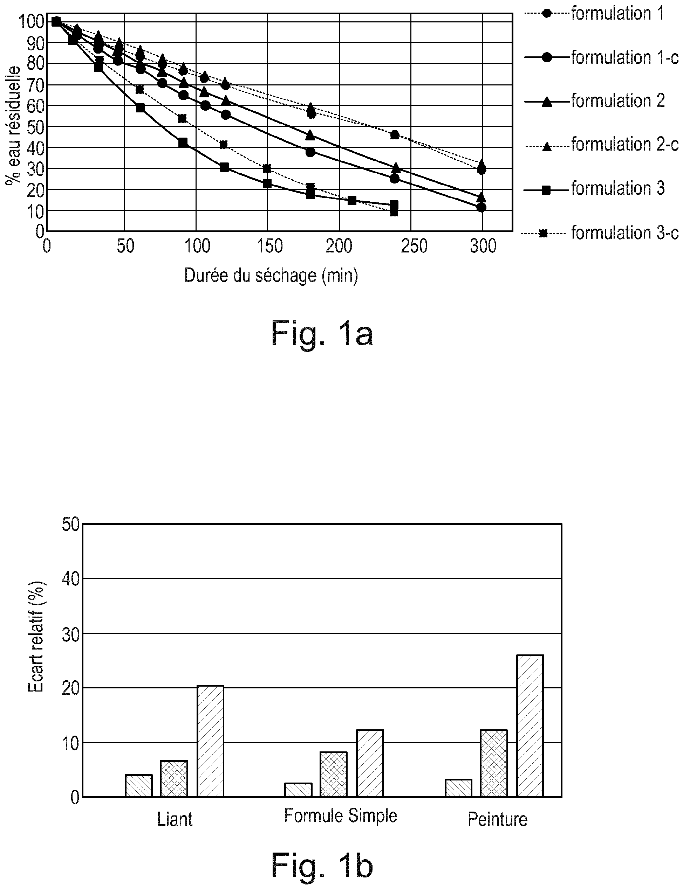

Figure 1: Représentation schématique du pourcentage d'eau résiduelle en fonction du temps de séchage pour chacune des formulations testées en exemple 1 (Figure la) ; et des écarts relatifs entre l'eau résiduelle de l'échantillon avec le polymère A et de celui sans le polymère A, après 30 minutes, 60 minutes et 120 minutes de séchage, pour chaque type de formulation testée (Figure 1b) ;

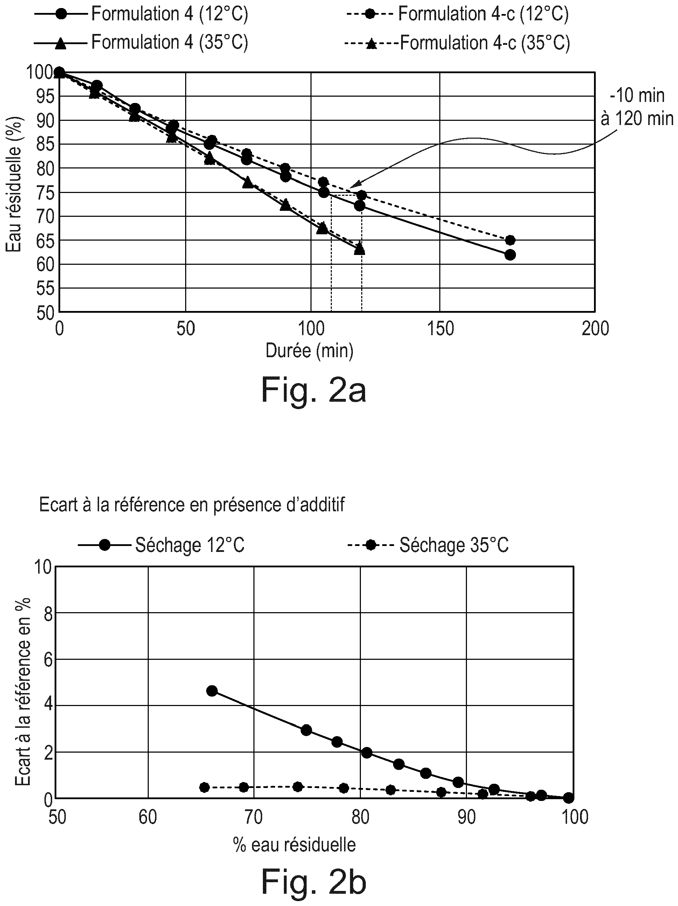

Figure 2 : Représentation schématique du pourcentage d'eau résiduelle en fonction du temps de séchage pour chacune des formulations testées en exemple 2 (Figure 2a), pour un séchage à 12°C et à 35°C, et évolution de l'écart relatif entre l'eau résiduelle de l'échantillon supplémenté avec le polymère B et de l'échantillon comparatif sans additif à UCST, pour un séchage à 12 °C et à 35 °C (Figure 2b).

### EXEMPLES

### Evaluation de la vitesse de séchage

Dans ces exemples, deux méthodes d'évaluation de l'impact de l'ajout de l'additif à UCST sur la cinétique de séchage d'échantillons de formulations de type peinture ont été utilisées :
- une mesure précise de la variation de la masse de l'échantillon au cours de son séchage (méthode dite « par pesée ») ; et
- une observation des empreintes suite à un toucher régulièrement effectué lors du séchage d'un film d'échantillon enduit (méthode dite « sec au coucher »).

Ces méthodes sont décrites ci-après.

### Méthode « par pesée »

Cette méthode consiste en un suivi, par pesées successives, de la perte de masse d'eau en fonction du temps d'un échantillon de formulation. Lorsque la masse est stable, on considère que l'échantillon est sec, et que la quantité d'eau résiduelle est négligeable.

La formulation n'est pas enduite sur un support, mais déposée dans un récipient de surface d'échange connue (disque de diamètre 50 mm). L'épaisseur humide de l'échantillon déposé et mis à sécher est de l'ordre de 600 µm.

Les pesées sont réalisées toutes les 15 minutes, pendant 2 heures, puis toutes les heures pendant 3 heures supplémentaires. La masse sèche est ensuite mesurée au bout de quelques jours.

Pour chaque essai, sont comparés simultanément les comportements respectifs d'un échantillon contenant l'additif à UCST et d'un échantillon équivalent sans additif.

Pour la quantification des écarts de temps de séchage des différents échantillons, le pourcentage d'eau résiduelle est calculé en fonction du temps de séchage. Il est donc important que les masses initiales d'eau dans les échantillons à comparer soient égales, afin de pouvoir comparer les quantités d'eau résiduelles à un temps donné.

Il est alors possible de calculer l'écart relatif entre l'eau résiduelle de l'échantillon avec l'additif (E) et de celui sans l'additif (R), défini par l'équation (R-E)/R. Un écart positif indique que l'échantillon avec l'additif sèche plus vite que l'échantillon de référence sans additif. Dans le cas d'un écart négatif, c'est l'inverse.

### Méthode « sec au toucher »

Pour cette méthode, il s'agit d'enduire un film d'échantillon sur un substrat de référence, de mettre le film dans une enceinte à température contrôlée, d'appliquer le doigt avec la même force sur la surface, à intervalles de temps réguliers (5 minutes) et d'observer l'empreinte laissée.

Pour chaque essai, sont comparés simultanément les comportements d'un échantillon comprenant l'additif à UCST et d'un échantillon équivalent sans additif.

Trois temps caractéristiques sont définis lors du séchage : lorsque l'empreinte change significativement d'allure (« temps 1 »), lorsque le toucher provoque un arrachement du film enduit (« temps 2 ») et lorsqu'on observe la dernière empreinte laissée par le toucher (« temps 3 »).

La comparaison de ces temps pour les échantillons avec et sans additif à UCST fournir une indication sur les différences de cinétique de séchage.

Cette méthode est réalisée dans une enceinte climatique avec une humidité contrôlée (RH=80%).

### Détermination de la température de transition « UCST »

L'UCST de l'additif est déterminée par détermination du point de trouble, identifié par mesure de la variation de la transmission optique en fonction de la température pour une dispersion de 5 % massique de l'additif à UCST dans l'eau pure.

Plus particulièrement, une solution à 5 % massique de polymère à UCST est testée pour évaluer la transmission d'un faisceau lumineux à travers une cuvette en quartz de 1 cm de chemin optique. La valeur de l'intensité transmise est mesurée pour la longueur d'onde 500 nm. Les mesures sont réalisées à différentes températures, par variation de 3 °C, de 45 °C à 3 °C, puis en chauffant. La température pour laquelle est observé un changement net de transmission, diminution de la transmission en refroidissement ou augmentation de la transmission en chauffant, est la valeur de l'UCST dans l'eau. Cette valeur peut dépendre de la concentration en polymère à UCST dans l'eau.

A noter que la méthode de détermination de l'UCST par mesure de la température de point de trouble nécessite une solution transparente au-dessus de l'UCST. Le liant, sous forme d'une dispersion blanche, ainsi que les composants tels que les pigments et les charges, présents dans les formulations testées de type peinture, rendent impossible la détermination du point de trouble par la méthode de mesure du point de trouble au sein des formulations testées.

### EXEMPLE 1

### Additif à UCST : « Polymère A »

L'additif à UCST mis en oeuvre est un copolymère d'acrylamide et d'acrylonitrile obtenu par copolymérisation dans les conditions opératoires décrites dans la publication Macromolecules 45, 3910-3918 (2012) (60 °C pendant 5h30), à partir d'un mélange de monomères formé de 88 % molaire d'acrylamide et de 12 % molaire d'acrylonitrile.

Le copolymère obtenu, appelé par la suite « polymère A », présente une température « UCST » dans l'eau, obtenue par détermination du point de trouble, comme décrit précédemment, de 10 °C.

### Formulations

Différentes formulations contenant 5 % massique du polymère A ont été préparées :
- une formulation 1 comprenant le polymère A dans un milieu aqueux comprenant uniquement, outre de l'eau à raison de 48 % en masse dans la formulation 1, un liant de type styrène acrylique à raison de 47 % en masse dans la formulation 1 ;
- une formulation aqueuse 2 comprenant le polymère A dans un milieu de type formule de peinture simplifiée à base du même liant que celui mis en oeuvre dans la formulation 1.

La formulation 2 contient plus particulièrement le liant à raison de 17 % massique, l'eau à raison de 34 % massique, des charges de type carbonates de calcium, ainsi qu'un pigment de type dioxyde de titane, et quelques additifs à raison de 2 à 3 % massique de type agent épaississant, agent anti-mousse, agent dispersant, agent biocide et agent de coalescence.
- une formulation aqueuse 3 comprenant le polymère A dans une formulation de peinture commerciale de peinture à base du même liant que celui utilisé dans les formulations (1) et (2).

La formulation 3 contient plus particulièrement le liant à raison de 17 % massique, l'eau à raison de 34 % massique, la formulation aqueuse 3 étant similaire à la formulation aqueuse 2 à la différence qu'elle contient un plus grand nombre d'additifs en une teneur totale de 5 % massique.

Pour chacune des formulations préparées, le polymère A est préalablement solubilisé dans une quantité d'eau minimale, puis ajouté aux autres composants de la formulation. Le mélange est réalisé à la spatule. La quantité d'eau utilisée correspond à une dilution à 10 % de la formule sans additif.

Des formulations de référence, appelées formulations 1-c, 2-c et 3-c, correspondant respectivement aux formulations 1, 2 et 3, sans ajout d'additif à UCST, ont été préparées, en procédant à une dilution dans l'eau équivalente aux formulations 1, 2 et 3 (10 % dans l'eau).

Il est à noter que l'ajout du polymère A ne provoque aucune modification de l'homogénéité de la formulation, ni de séparation de phase, quelles que soient les conditions de température testées (en-dessous ou au-dessus de l'UCST). Seule une augmentation de viscosité des formulations à l'issue de l'ajout du polymère A est observée.

### Résultats

Les formulations sont évaluées selon la méthode dite « par pesée » décrite précédemment, à une température de 7°C (soit en-dessous de l'UCST du polymère A), dans une enceinte à humidité non contrôlée.

Les résultats obtenus en termes de pourcentage d'eau résiduelle dans les formulations en fonction du temps de séchage pour chacune des formulations sont représentés en Figure 1.

On observe que la perte de masse pour les trois types de formulation est plus rapide en présence de l'additif à UCST.

Les écarts relatifs entre l'eau résiduelle de l'échantillon avec le polymère A et de l'échantillon comparatif sans le polymère A sont représentés en figure 2a, après 30 minutes, 60 minutes et 120 minutes de séchage pour chaque type de formulation testée (formulations 1 et 1c : « liant », formulations 2 et 2-c : « Formule simple » et formulations 3 et 3-c : « peinture »).

L'écart relatif, entre l'avancement du séchage d'une formulation supplémentée avec le polymère A et celui d'une formulation de référence, est positif, et augmente avec le temps de séchage.

Les résultats du test de séchage montrent que, pour les trois types de formulation, la présence de l'additif à UCST permet d'accélérer le séchage dans des conditions ambiantes de température inférieure à la température « UCST » du polymère A dans l'eau.

### EXEMPLE 2

### Additif à UCST : « Polymère B »

L'additif à UCST mis en oeuvre est un copolymère d'acrylamide et d'acrylonitrile obtenu par copolymérisation dans les conditions opératoires décrites dans la publication Macromolecules 45, 3910-3918 (2012) (90 °C pendant 2 heures), à partir d'un mélange de monomères formé de 88 % molaire d'acrylamide et de 12 % molaire d'acrylonitrile.

Le copolymère obtenu, appelé par la suite « polymère B », présente une température « UCST » dans l'eau, obtenue par détermination du point de trouble, comme décrit précédemment, pour 5% massique de polymère B dans l'eau, de 24 °C.

### Formulations testées

- Les formulations testées suivant la méthode dite « par pesée » décrite précédemment, sont une formulation de peinture commerciale supplémentée à 2,7 % massique en polymère B, dite formulation 4, la formulation de peinture commerciale étant la même que celle utilisée pour la formulation 3 de l'exemple 1, et une formulation comparative 4-c dépourvue de polymère B.
- Les formulations testées suivant la méthode dite « sec au toucher » décrite précédemment, sont une première formulation de peinture commerciale supplémentée à 2 % massique en polymère B, dite formulation 5, la formulation de peinture commerciale étant la même que celle utilisée pour la formulation 3 de l'exemple 1, et une formulation comparative 5-c dépourvue de polymère B.

L'ensemble des formulations sont préparées comme décrit en exemple 1 par dilution à 10 % dans l'eau.

Il est à noter que l'ajout du polymère B ne provoque aucune modification de l'homogénéité de la formulation, ni de séparation de phase, quelles que soient les conditions de température testées (en-dessous ou au-dessus de l'UCST). Seule une augmentation de viscosité des formulations à l'issue de l'ajout du polymère B est observée.

Les tests sont réalisés dans une enceinte à humidité contrôlée (humidité relative « RH » de 80 %).

### Résultats

- Les formulations 4 et 4-c sont évaluées selon la méthode dite « par pesée » décrite précédemment, d'une part, à une température ambiante de 35 °C (soit une température supérieure à l'UCST du polymère B), et d'autre part, à une température ambiante de 12 °C (soit une température inférieure à l'UCST du polymère B).

Les résultats obtenus en termes de pourcentage d'eau résiduelle dans les formulations en fonction du temps de séchage pour chacune des formulations, dans les conditions ambiantes de température précitée, sont représentés en Figure 2a.

A haute température (35°C), le séchage est plus rapide qu'à plus basse température (12°C) que ce soit pour l'échantillon supplémenté avec l'additif à UCST, que pour l'échantillon qui en est dépourvu.

Dans les conditions ambiantes de température de 35°C, on n'observe pas de différence significative entre les deux échantillons.

En revanche, dans les conditions ambiantes de température en-dessous de l'UCST du polymère B, on constate que l'échantillon supplémenté avec l'additif à UCST perd son eau plus rapidement que l'échantillon sans additif.

En Figure 2b, est représenté l'évolution de l'écart relatif entre l'eau résiduelle de l'échantillon supplémenté avec le polymère B et de l'échantillon comparatif sans additif à UCST.

Alors que cet écart reste constant et quasi nul dans les conditions ambiantes de température de 35 °C, cet écart varie quasi linéairement et augmente avec le temps de séchage.

Ces résultats montrent clairement que l'ajout du polymère à UCST permet, dans des conditions ambiantes de température inférieure à l'UCST de l'additif, d'obtenir un séchage de la formulation plus rapide.

Dans des conditions ambiantes de température supérieure à l'UCST, la cinétique de séchage ne semble pas affectée.

Le calcul du temps nécessaire pour atteindre le même taux d'eau résiduelle indique que, pour un séchage de la formulation sans additif de 2 heures à 12 °C, l'ajout de 2,7 % massique d'additif à UCST permet de gagner 10 minutes (voir construction graphique sur la Figure 2a).

Ces résultats sont confirmés par l'étude réalisée avec la méthode de suivi « sec au toucher ».
- Les formulations 5 et 5-c sont évaluées selon la méthode dite « sec au toucher » décrite précédemment, d'une part, à une température ambiante de 35 °C (soit une température supérieure à l'UCST du polymère B), et d'autre part, à une température ambiante de 12 °C (soit une température inférieure à l'UCST du polymère B).

Les formulations ont été enduites pour former une épaisseur humide de 200 µm et le séchage a été suivi pour les deux températures de séchage, en touchant la surface toutes les cinq minutes.

Les trois temps caractéristiques de l'évolution du séchage, obtenus pour chacune des formulations, et dans les conditions ambiantes de basse température et de température élevés, sont rassemblés dans le tableau 1 ci-dessous.

**TABLEAU 1**

| **Evolution du séchage (en minutes)** | **Température ambiante de 12 °C** | | **Température ambiante de 35 °C** | |
|---|---|---|---|---|
| | **Formulation 5** | **Formulation 5-c** | **Formulation 5** | **Formulation 5-c** |
| **Temps 1** | 45 | 50 | 45 | 50 |
| **Temps 2** | 50 | 60 | 45 | 50 |
| **Temps 3** | 50 | 90 | 45 | 60 |

| | | | | |
|---|---|---|---|---|
| Temps 1 : lorsque l'empreinte change significativement d'allure, Temps 2 : lorsque le toucher provoque l'arrachement du film, Temps 3 : lorsqu'on observe la dernière empreinte laissée par le toucher. | | | | |

Comme attendu, le séchage est significativement plus rapide à température élevée (35 °C) qu'à plus basse température (12°C), que ce soit pour l'échantillon supplémenté avec l'additif à UCST, que pour l'échantillon qui en est dépourvu.

Dans les conditions ambiantes de basse température (12 °C), on constate de grandes différences entre les temps caractéristiques de séchage de l'échantillon supplémenté en polymère B et de l'échantillon qui en est dépourvu : 5 minutes pour le changement de marque, 10 minutes pour le temps d'arrachement et 40 minutes pour l'empreinte finale.

Ainsi, l'enduction de la formulation contenant le polymère B à UCST sèche beaucoup plus vite que l'enduction de la formulation non supplémentée en polymère B, dans les conditions ambiantes de température inférieure à l'UCST du polymère B.

La combinaison de la méthode dite « sec au toucher » et de la méthode « par pesée » de l'eau résiduelle a permis de mettre en évidence que l'ajout du co-polymère à UCST accélère le séchage pour une basse température, en-dessous de la valeur de l'UCST du co-polymère dans l'eau.

Cette accélération n'est pas significative lorsque le séchage est réalisé à température élevée au-dessus de l'UCST.

Ainsi, l'introduction d'un additif à UCST permet avantageusement d'accélérer le séchage d'une peinture enduite dans des conditions ambiantes froides et humides (par exemple, 12 °C et RH=80 %).

## Revendications

1. Utilisation, dans une composition aqueuse fluide apte à former un revêtement en surface d'un support utilisé en bâtiment et dans l'industrie de la construction, d'au moins un polymère à changement de phase de type UCST, à titre d'additif pour réduire la durée de séchage requise pour former ledit revêtement dans des conditions ambiantes de température inférieure à la valeur de température critique supérieure de solubilité, dite UCST, du polymère dans l'eau.

2. Utilisation selon la revendication précédente, pour réduire la durée de séchage requise pour former ledit revêtement dans des conditions ambiantes de température comprise entre 1 °C et 35 °C, notamment entre 3 °C et 20 °C, en particulier inférieure ou égale à 10 °C.

3. Utilisation selon l'une quelconque des revendications précédentes, **caractérisée en ce que** ladite composition est une formulation aqueuse de peinture, vernis ou laque, en particulier une peinture aqueuse et plus particulièrement une peinture extérieure, par exemple une peinture façade.

4. Utilisation selon l'une quelconque des revendications précédentes, **caractérisée** en que ledit polymère à UCST présente une valeur d'UCST, dans l'eau, supérieure ou égale à 6°C, en particulier comprise entre 6 °C et 60 °C, notamment entre 8 et 35 °C, en particulier entre 8 et 30 °C et plus particulièrement entre 10 et 25°C.

5. Utilisation selon l'une quelconque des revendications précédentes, **caractérisée en ce que** ledit polymère à UCST est choisi parmi les homopolymères, et copolymères résultant de la polymérisation d'au moins un monomère, d'acide acrylique, méthacrylamide, uracilacrylate, *N*-acryloyl glycinamide, *N*-acryloyl asparagine amide, *N*-acryloyl glutamine amide ou *N*-méthacryloyl asparagine amide ; les copolymères d'allylamine et d'allylurée, les copolymères de L-citrulline et de L-ornithine, les copolymères d'acrylamide et d'un co-monomère hydrophobe, en particulier les copolymères d'acrylamide et d'acrylonitrile et les copolymères de (méth)acrylamide et de N-acétylacrylamide, ledit polymère à UCST étant plus particulièrement un copolymère d'acrylamide et d'acrylonitrile, en particulier obtenu à partir d'un mélange de monomères comprenant au moins 10 % molaire d'acrylonitrile, en particulier comprenant de 11 à 30 % molaire d'acrylonitrile.

6. Utilisation selon l'une quelconque des revendications précédentes, **caractérisée** en que le ou lesdits polymères à UCST est(sont) mis en oeuvre dans ladite composition en une teneur d'au moins 0,1 % en poids, en particulier comprise entre 0,1 et 10 % en poids, notamment entre 2 et 7 % en poids et plus particulièrement à environ 5 % en poids.

7. Composition aqueuse fluide de peinture, destinée à former un revêtement en surface d'un support utilisé en bâtiment et dans l'industrie de la construction, **caractérisée en ce que** ladite composition comprend au moins un polymère à changement de phase de type UCST, en particulier tel que défini selon l'une quelconque des revendications 4 et 5, et entre 5 % et 50 % en poids de liant(s) ; ladite composition présentant une viscosité, mesurée à 25°C et à pression atmosphérique, à l'aide d'un viscosimètre Brookfield, comprise entre 500 mPa.s et 50 000 mPa.s.

8. Composition selon la revendication précédente, ladite composition étant une peinture extérieure et plus particulièrement une peinture façade.

9. Composition selon la revendication 7 ou 8, **caractérisée en ce qu'**elle comprend au moins 0,1 % en poids de polymère(s) à UCST, en particulier entre 0,1 et 10 % en poids, notamment entre 2 et 7 % en poids et plus particulièrement environ 5 % en poids de polymère(s) à UCST, par rapport au poids total de la composition.

10. Composition selon l'une quelconque des revendications 7 à 9, **caractérisée en ce qu'**elle comprend en outre un ou plusieurs composés choisis parmi les charges, les pigments et des additifs tels que des agents dispersants, des agents mouillants, des agents de neutralisation, des agents épaississants, des agents anti-mousses, des agents biocides, des agents de coalescence, des agents dits « anti-flash rusting », des agents anti-calcaire, des agents d'étalement, des agents matants, des agents de glisse ou encore des siccatifs.

11. Procédé de préparation d'une composition aqueuse fluide telle que définie selon l'une quelconque des revendications 7 à 10, par ajout à une formulation de peinture, destinée à être utilisée en bâtiment et dans l'industrie de la construction, d'au moins un polymère à changement de phase de type UCST.

12. Procédé de formation, dans les conditions ambiantes de température, d'un revêtement en surface d'un support utilisé en bâtiment et dans l'industrie de la construction, à partir d'une composition aqueuse fluide telle que définie selon l'une quelconque des revendications 7 à 10, ledit revêtement étant formé dans des conditions ambiantes de température inférieure à la valeur de température critique supérieure de solubilité, dite UCST, du polymère dans l'eau.

13. Procédé selon la revendication précédente, ledit revêtement étant formé dans des conditions ambiantes de température comprise entre 1 °C et 35 °C, en particulier entre 3 °C et 20 °C et plus particulièrement inférieure ou égale à 10 °C.

14. Procédé selon la revendication 12 ou 13, comprenant (i) l'application d'une couche de ladite composition en surface du support, notamment opérée par enduction ou pulvérisation de la composition en surface dudit support, en particulier par pinceau, brosse, rouleau, pistolet « airless », taloche ; suivie (ii) du séchage de ladite couche, les étapes (i) et (ii) étant opérées dans les conditions ambiantes de température.

15. Procédé selon l'une quelconque des revendications 12 à 14, **caractérisée en ce que** ledit support est en bois, en métal, en verre, en béton, en ciment, en plâtre ou en briques, en particulier ledit support consiste en la façade d'un bâtiment.

16. Support, utilisé en bâtiment et dans l'industrie de la construction, caractérisé en qu'il présente un revêtement de surface d'épaisseur allant de 50 µm à 10 mm, obtenu par un procédé tel que défini selon l'une quelconque des revendications 12 à 14, ledit support étant en bois, en métal, en verre, en béton, en ciment, en plâtre ou en briques.

## Patentansprüche

1. Verwendung mindestens eines Phasenwechselpolymers vom UCST-Typ als Additiv zur Verminderung der zur Bildung einer Beschichtung erforderlichen Trockenzeit unter Umgebungstemperaturbedingungen unter dem Wert der als UCST bezeichneten oberen kritischen Lösungstemperatur des Polymers in Wasser in einer flüssigen wässrigen Zusammensetzung, die zur Bildung einer Beschichtung auf der Oberfläche eines im Bauwesen und in der Bauindustrie verwendeten Untergrunds geeignet ist.

2. Verwendung nach dem vorhergehenden Anspruch zur Verminderung der zur Bildung der Beschichtung erforderlichen Trockenzeit unter Umgebungstemperaturbedingungen zwischen 1 °C und 35 °C, im Besonderen zwischen 3 °C und 20 °C, insbesondere unterhalb von oder gleich 10 °C.

3. Verwendung nach einem der vorhergehenden Ansprüche, **dadurch gekennzeichnet, dass** es sich bei der Zusammensetzung um eine wässrige Farb-, Anstrichmittel- oder Lackformulierung , insbesondere eine wässrige Farbe und noch spezifischer eine Außenfarbe, beispielsweise eine Fassadenfarbe, handelt.

4. Verwendung nach einem der vorhergehenden Ansprüche, **dadurch gekennzeichnet, dass** das UCST-Polymer einen UCST-Wert in Wasser von mehr als oder gleich 6 °C, insbesondere zwischen 6 °C und 60 °C, im Besonderen zwischen 8 und 35 °C, insbesondere zwischen 8 und 30 °C und noch spezifischer zwischen 10 und 25 °C, aufweist.

5. Verwendung nach einem der vorhergehenden Ansprüche, **dadurch gekennzeichnet, dass** das UCST-Polymer aus Homopolymeren und Copolymeren, die aus der Polymerisation mindestens eines Acrylsäure-, Methacrylamid-, Uracilacrylat-, *N*-Acryloylglycinamid-, *N-*Acryloylasparaginamid-, *N*-Acryloylglutaminamid- oder *N-*Methacryloylasparaginamid-Monomers resultieren; Copolymeren von Allylamin und Allylharnstoff, Copolymeren von L-Citrullin und L-Ornithin, Copolymeren von Acrylamid und einem hydrophoben Comonomer, insbesondere Copolymeren von Acrylamid und Acrylnitril und Copolymeren von (Meth)Acrylamid und N-Acetylacrylamid, ausgewählt ist, wobei es sich bei dem UCST-Polymer noch spezifischer um ein Copolymer von Acrylamid und Acrylnitril handelt, das aus einer Monomermischung erhalten wird, die mindestens 10 Mol-% Acrylnitril umfasst, insbesondere von 11 bis 30 Mol-% Acrylnitril umfasst.

6. Verwendung nach einem der vorhergehenden Ansprüche, **dadurch gekennzeichnet, dass** das oder die UCST-Polymere in der Zusammensetzung mit einem Gehalt von mindestens 0,1 Gew.-%, insbesondere zwischen 0,1 und 10 Gew.-%, im Besonderen zwischen 2 und 7 Gew.-% und noch spezifischer mit etwa 5 Gew.-% verwendet werden.

7. Flüssige wässrige Farbzusammensetzung, die zur Bildung einer Beschichtung auf der Oberfläche eines im Bauwesen und in der Bauindustrie verwendeten Untergrunds vorgesehen ist, **dadurch gekennzeichnet, dass** die Zusammensetzung mindestens ein Phasenwechselpolymer vom UCST-Typ, insbesondere gemäß der Definition in einem der Ansprüche 4 und 5, und zwischen 5 Gew.-% und 50 Gew.-% (eines) Bindemittel(s) umfasst; wobei die Zusammensetzung eine bei 25 °C und Atmosphärendruck mit einem Brookfield-Viskosimeter gemessene Viskosität zwischen 500 mPa.s und 50 000 mPa.s aufweist.

8. Zusammensetzung nach dem vorhergehenden Anspruch, wobei es sich bei der Zusammensetzung um eine Außenfarbe und noch spezifischer um eine Fassadenfarbe handelt.

9. Zusammensetzung nach Anspruch 7 oder 8, **dadurch gekennzeichnet, dass** sie mindestens 0,1 Gew.-% UCST-Polymer(e), insbesondere zwischen 0,1 und 10 Gew.-%, im Besonderen zwischen 2 und 7 Gew.-% und noch spezifischer etwa 5 Gew.-% UCST-Polymer(e), bezogen auf das Gesamtgewicht der Zusammensetzung, umfasst.

10. Zusammensetzung nach einem der Ansprüche 7 bis 9, **dadurch gekennzeichnet, dass** sie außerdem ein oder mehrere Verbindungen umfasst, die aus Füllstoffen, Pigmenten und Additiven wie Dispergiermitteln, Benetzungsmitteln, Neutralisationsmitteln, Verdickungsmitteln, Schaumverhütungsmitteln, Bioziden, Koaleszensmitteln, als "Antiflugrost" bezeichneten Mitteln, Ablagerungsverhinderungsmitteln, Verlaufmitteln, Mattierungsmitteln, Gleitmitteln oder sogar Trockenmitteln ausgewählt sind.

11. Verfahren zur Herstellung einer flüssigen wässrigen Zusammensetzung gemäß der Definition in einem der Ansprüche 7 bis 10 durch das Zugeben mindestens eines Phasenwechselpolymers vom UCST-Typ zu einer Farbformulierung, die zur Verwendung im Bauwesen und in der Bauindustrie geeignet ist.

12. Verfahren zur Bildung einer Beschichtung auf der Oberfläche eines im Bauwesen und in der Bauindustrie verwendeten Untergrunds unter Umgebungstemperaturbedingungen aus einer flüssigen wässrigen Zusammensetzung gemäß der Definition in einem der Ansprüche 7 bis 10, wobei die Beschichtung unter Umgebungstemperaturbedingungen unter dem Wert der als UCST bezeichneten oberen kritischen Lösungstemperatur des Polymers in Wasser gebildet wird.

13. Verfahren nach dem vorhergehenden Anspruch, wobei die Beschichtung unter Umgebungstemperaturbedingungen zwischen 1 °C und 35 °C, insbesondere zwischen 3 °C und 20 °C und noch spezifischer unterhalb von oder gleich 10 °C gebildet wird.

14. Verfahren nach Anspruch 12 oder 13, das (i) das Auftragen einer Schicht der Zusammensetzung auf die Oberfläche des Untergrunds umfasst, das im Besonderen durch ein Auftragen oder Spritzen der Zusammensetzung auf die Oberfläche des Untergrunds insbesondere mit einem Pinsel, einer Bürste, Rolle, Airless-Pistole, Traufel durchgeführt wird, gefolgt von (ii) dem Trocknen der Schicht, wobei die Schritte (i) und (ii) unter Umgebungstemperaturbedingungen durchgeführt werden.

15. Verfahren nach einem der Ansprüche 12 bis 14, **dadurch gekennzeichnet, dass** der Untergrund aus Holz, Metall, Glas, Beton, Zement, Gips oder Ziegelsteinen besteht, wobei der Untergrund insbesondere aus der Fassade eines Gebäudes besteht.

16. Untergrund, der im Bauwesen und in der Bauindustrie verwendet wird, **dadurch gekennzeichnet, dass** er eine Oberflächenbeschichtung mit einer Dicke von 50 µm bis 10 mm aufweist, die durch ein Verfahren gemäß der Definition in einem der Ansprüche 12 bis 14 erhalten wird, wobei der Untergrund aus Holz, Metall, Glas, Beton, Zement, Gips oder Ziegelsteinen besteht.

## Claims

1. Use, in a fluid aqueous composition suitable for forming a coating on the surface of a substrate used in the building and construction industry, of at least one UCST-type phase-change polymer as an additive to reduce the drying time required to form said coating under ambient temperature conditions below the upper critical solution temperature, or UCST, value of the polymer in water.

2. Use according to the preceding claim for reducing the drying time required to form said coating under ambient temperature conditions of between 1°C and 35°C, especially of between 3°C and 20°C, in particular less than or equal to 10°C.

3. Use according to either one of the preceding claims, **characterized in that** said composition is an aqueous paint, varnish or lacquer formulation, in particular an aqueous paint and more particularly an exterior paint, for example a facade paint.

4. Use according to any one of the preceding claims, **characterized in that** said UCST polymer has a UCST value in water of greater than or equal to 6°C, in particular of between 6°C and 60°C, especially of between 8 and 35°C, in particular of between 8 and 30°C and more particularly of between 10 and 25°C.

5. Use according to any one of the preceding claims, **characterized in that** said UCST polymer is selected from homopolymers and copolymers resulting from the polymerization of at least one monomer of acrylic acid, methacrylamide, uracil acrylate, *N*-acryloyl glycinamide, *N*-acryloyl asparagine amide, *N*-acryloyl glutamine amide or *N*-methacryloyl asparagine amide; copolymers of allylamine and allylurea, copolymers of L-citrulline and L-ornithine, copolymers of acrylamide and a hydrophobic comonomer, in particular copolymers of acrylamide and acrylonitrile and copolymers of (meth)acrylamide and N-acetylacrylamide, said UCST polymer being more particularly a copolymer of acrylamide and acrylonitrile, in particular obtained from a mixture of monomers comprising at least 10 mol% of acrylonitrile, in particular comprising from 11 to 30 mol% of acrylonitrile.

6. Use according to any one of the preceding claims, **characterized in that** said UCST polymer(s) is/are used in said composition in a content of at least 0.1% by weight, in particular of between 0.1% and 10% by weight, especially of between 2% and 7% by weight and more particularly approximately 5% by weight.

7. Fluid aqueous paint composition for forming a coating on the surface of a substrate used in the building and construction industry, **characterized in that** said composition comprises at least one UCST-type phase-change polymer, in particular as defined according to either one of Claims 4 and 5, and between 5% and 50% by weight of binder(s), said composition having a viscosity, measured at 25°C and at atmospheric pressure using a Brookfield viscometer, of between 500 mPa.s and 50 000 mPa.s.

8. Composition according to the preceding claim, said composition being an exterior paint and more particularly a facade paint.

9. Composition according to Claim 7 or 8, **characterized in that** it comprises at least 0.1% by weight of UCST polymer (s), in particular between 0.1% and 10% by weight, especially between 2% and 7% by weight and more particularly approximately 5% by weight of UCST polymer(s), relative to the total weight of the composition.

10. Composition according to any one of Claims 7 to 9, **characterized in that** it also comprises one or more compounds selected from fillers, pigments and additives such as dispersing agents, wetting agents, neutralizing agents, thickening agents, antifoaming agents, biocidal agents, coalescing agents, what are known as anti-flash-rusting agents, anti-limescale agents, spreading agents, matting agents, slip agents or drying agents.

11. Method for preparing a fluid aqueous composition as defined according to any one of Claims 7 to 10, by adding at least one UCST-type phase-change polymer to a paint formulation for use in the building and construction industry.

12. Method for forming, under ambient temperature conditions, a coating on the surface of a substrate used in the building and construction industry from a fluid aqueous composition as defined according to any one of Claims 7 to 10, said coating being formed under ambient temperature conditions below the upper critical solution temperature, or UCST, value of the polymer in water.

13. Method according to the preceding claim, said coating being formed under ambient temperature conditions of between 1°C and 35°C, in particular of between 3°C and 20°C and more particularly less than or equal to 10°C.

14. Method according to Claim 12 or 13, comprising the steps of (i) applying a layer of said composition to the surface of the substrate, this being carried out especially by coating or spraying the composition onto the surface of said substrate, in particular by means of a paintbrush or other brush, roller, airless gun or trowel, followed by (ii) drying of said layer, steps (i) and (ii) being carried out under ambient temperature conditions.

15. Method according to any one of Claims 12 to 14, **characterized in that** said substrate is made of wood, metal, glass, concrete, cement, plaster or brick, in particular said substrate consists of the facade of a building.

16. Substrate used in the building and construction industry, **characterized in that** it has a surface coating of thickness ranging from 50 um to 10 mm, obtained by a method as defined according to any one of Claims 12 to 14, said substrate being made of wood, metal, glass, concrete, cement, plaster or brick.
